Europäisches Patentamt

(19) European Patent Office

Office européen des brevets

(11) Publication number: **0 136 080**
**B1**

(12) EUROPEAN PATENT SPECIFICATION

(45) Date of publication of patent specification: 02.03.88

(51) Int. Cl.⁴: **B 27 C 3/06**

(21) Application number: 84305803.3

(22) Date of filing: 24.08.84

(54) A drill jig for dowel joints.

(30) Priority: 27.08.83 DE 8324646 u

(43) Date of publication of application:
03.04.85 Bulletin 85/14

(45) Publication of the grant of the patent:
02.03.88 Bulletin 88/09

(84) Designated Contracting States:
BE DE FR GB IT LU NL

(56) References cited:
DE-A-2 750 869

(73) Proprietor: Black & Decker Inc.
Drummond Plaza Office Park 1423 Kirkwood Highway
Newark Delaware 19711 (US)

(72) Inventor: Marx, Dietrich
An der Kreuzheck 6
D-6273 Waldems 4 (DE)

(74) Representative: Lucas, Brian Ronald et al
Lucas, George & Co. 135 Westhall Road
Warlingham Surrey CR3 9HJ (GB)

## Description

This invention relates to a drill jig for preparing dowel joints between two workpieces to be interconnected end-face to side-face.

A prior art drill jig is disclosed in German OS 31 05 180. This drill jig comprises two members, namely a first member having two arms extending at right angles to one another, and a second member which is slidably connected to rods which extend from the first member. One side of one arm defines a first abutment surface for a workpiece which is to be drilled on its end face. The rods define a second abutment surface for the workpiece which is to be drilled in its side face via a guide bore in the second member. The second member is slidably mounted on the rods to accommodate workpieces of different thicknesses. During machining the two workpieces lie parallel with one another, the arm of the drill jig forming the first abutment surface being disposed between them.

Another drill jig is also known (German Patent Specification 24 37 724) in which both a first abutment surface and a guide hole and also a second abutment surface and bore hole are formed on and in a single drill jig, in order to provide workpieces to be interconnected end-face to side-face with associated bores. However, with that prior art drill jig for drilling purposes the workpieces must be arranged at right angles to one another in the manner of their subsequent connection. This arrangement of the workpieces relative to the drill jig causes considerable retaining difficulties, more particularly in the machining of large boards.

DE—A—27 50 869 discloses a drill jig comprising two mutually perpendicular arms. One arm carries a slide which can be moved along the arm and carries a guide bore. The other arm is formed in two parts, one of which is rigidly connected to the first arm and the other of which is slidable with respect thereto and carries a guide hole. The setting up of this jig is extremely complex.

The present invention seeks to provide a drill jig for preparing dowel joints, in which the workpieces to be interconnected end-face to side-face are retained parallel with one another for the production of the bores, in which said workpieces contact respective guide surfaces of the drill jig, and in which no guide surfaces must be displaced for adaptation to the dimensions of the workpieces.

According to one aspect of the present invention there is provided a drill jig for preparing dowel joints between two workpieces to be interconnected end face to side face, comprising a first arm, a second arm integral with said first arm and extending generally perpendicular to said first arm, a guide bore in said first arm for, in use, guiding a drill into one side face of one of said workpieces, a guide hole in said second arm for, in use, guiding a drill into one end face of the other of said workpieces, the longitudinal axis of said guide bore and said guide hole being mutually perpendicular and in the same plane, said first arm having a first abutment surface which extends parallel to the longitudinal axis of said guide hole and said second arm having a second abutment surface which extends parallel to the longitudinal axis of said guide bore, both abutment surfaces lying in planes which meet at right angles, characterized in that the distance between said first abutment surface and the longitudinal axis of said guide hole is equal to the distance between said second abutment surface and the longitudinal axis of said guide bore, and in that said first abutment surface and said second abutment surface lie completely inside the right angle enclosed by the longitudinal axis of the guide bore and the guide hole.

According to another aspect of the invention, there is provided a drill jig for preparing dowel joints between two workpieces to be interconnected end face to side face, comprising a first arm, a second arm integral with said first arm and extending generally perpendicular to said first arm, a guide bore in said first arm for, in use, guiding a drill into one side face of one of said workpieces, a guide hole in said second arm for, in use, guiding a drill into one end face of the other of said workpieces, the longitudinal axis of said guide bore and said guide hole being mutually perpendicular and in the same plane, said first arm having a first abutment surface which extends parallel to the longitudinal axis of said guide hole and said second arm having a second abutment surface which extends parallel to the longitudinal axis of said guide bore, both abutment surfaces lying in planes which meet at right angles, characterized in that the distance between said first abutment surface and the longitudinal axis of said guide bore and in that the first abutment surface lies on the first arm and is located further from the corner between the two arms than the guide bore, and that the second abutment surface lies on the second arm and is located further from the corner between the two arms than the guide hole.

Preferably stops are provided to prevent said other of said workpieces obstructing said guide bore.

When using the drill jig, the two workpieces may be interconnected by screw clamps in conventional manner. This clamping of the workpieces allows the drill jig to be moved along the workpiece edges without the risk that the workpieces may become displaced in relation to one another: if the workpieces are displaced, the bores/holes are misaligned and joints cannot be made. A preferred feature enables the drill jig to be retained in a fixed position during the making of two associated bores whereby the bores produced are in alignment with one another when the workpieces are connected. According to this preferred feature the drill jig is provided with a third arm extending generally perpendicular to said second arm and a clamping screw arranged with its clamping end extending out of the third arm on the side of the first arm.

The screw clamp enables that workpiece, which is to be drilled at the end face, to be pressed tightly against the first abutment surface, thus fixing the position of the drill jig.

It may be that the two workpieces to be machined are not to be so interconnected that one surface of the workpiece, which is to be drilled at the end face, is in alignment with the corresponding end face of the other workpiece, which is to be drilled on the side face. Instead the workpiece which is to be drilled at the end face, may be required to be applied at a location intermediate the length of the other workpiece, which is to be drilled on the side face. In that event it is impossible to place the workpieces into suitable positions relative to the guide hole and guide bore if one follows the manner of positioning the workpieces at the first abutment surface and second abutment surface aforedescribed.

However, to enable the drill jig according to the invention to be used even in that event, it is a preferred feature that a flat outer surface of the drill jig is parallel with the second abutment surface and extends at right angles to the longitudinal axis of said at least one guide hole, and a pin-receiving bore is provided in the outside of that zone of the drill jig which has at least one guide bore, said pin-receiving bore extending parallel with the guide bore with its longitudinal axis lying in the plane of the longitudinal axes of guide hole and guide bore, the distance of said pin-receiving bore from the outer surface of the drill jig being equal to the distance between the first abutment surface and the guide hole.

It is also a preferred feature that a pin is provided for insertion in the pin-receiving bore, said pin having a head which has a diameter only slightly smaller than the diameter of the guide hole.

A hole may be drilled in the end face of one workpiece first of all in the manner disclosed hereinbefore, using a drill jig constructed as specified. The workpiece may then be so applied to that surface of the drill jig which has the pin-receiving bore that the head of the pin extends into the bore produced, one main surface of the workpiece being in alignment with the flat outer surface of the drill jig 1. In this position the other workpiece may be so applied to the workpiece in engagement with the head of the pin and the flat outer surface of the drill jig that the guide hole is situated at the place at which a hole is to be drilled into the side face of the workpiece. When the side-face hole is produced in this way, the result is that the holes or bores produced in the workpieces lie in a common plane, namely in the plane in which the longitudinal axes of the guide hole, guide bore and pin-receiving bore are also disposed.

Another embodiment of the drill jig further comprises a flat, outer surface which is parallel with the second abutment surface and extends at right angles to the longitudinal axis of said at least one guide hole, a zone of the drill jig extending normally of said guide bore, at least one pin-receiving slot having a semi-circular slot bottom, said slot extending through a zone of the drill jig through which the guide bore extends, said pin-receiving slot having a longitudinal axis which extends through the centre of the semicircle of the slot bottom and parallel with the longitudinal axis of the guide bore, said longitudinal axis of the slot lying in the plane of the longitudinal axes of guide hole and guide bore, the distance of said slot from the outer surface of the drill jig being equal to the distance between the first abutment surface and the guide hole, and the radius of the semicircle slot bottom being equal to or slightly greater than the radius of the guide hole.

If such pin-receiving slots are used, the previously mentioned pin to be inserted in the pin-receiving bore is no longer necessary, but is replaced by a dowel which is to be used to interconnect the two workpieces and which is inserted, with a suitable arrangement in relation to the drill jig, into the bottom of the pin-receiving slot.

Embodiments of the invention will now be described in greater detail, by way of example only, with reference to the accompanying drawings, in which:—

Fig. 1 is a section through a drill jig;

Fig. 2 is a side elevation of a drill jig similar to that shown in Fig. 1;

Fig. 3 is a plan view of the drill jig shown in Fig. 2;

Fig. 4 is a view of the drill jig of Fig. 2 viewed from the left, the screw clamp being omitted;

Fig. 5 is a section taken along the line V—V in Fig. 4; and,

Fig. 6 is a section through another embodiment of the drill jig.

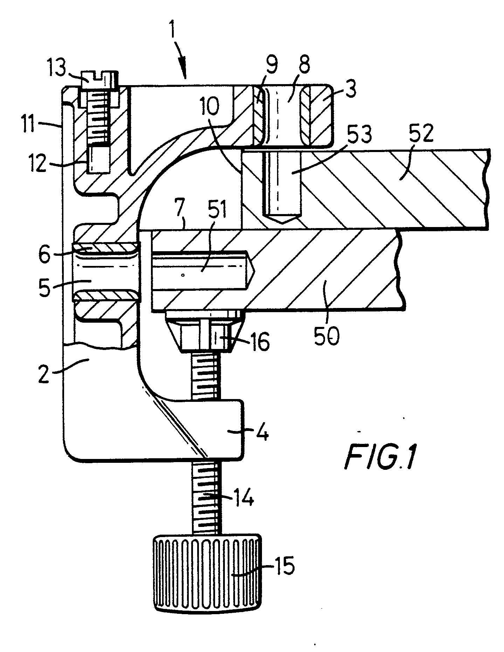

Referring to Fig. 1, there is shown a drill jig 1 which comprises a first arm 3, a second arm 2 and a third arm 4. A lining bush 9 of hardened material is inserted in the first arm 3 and bounds a guide bore 8.

A lining bush 6, also of hardened material, is inserted in the second arm 2 of the drill jig 1 and bounds a guide hole 5 whose diameter is equal to the diameter of the guide bore 8.

On the inner side of the second arm 2 and adjacent the first arm 3 is formed a first abutment surface 7 which extends parallel with the longitudinal axis of the guide hole 5 and co-operates with a second abutment surface 10 which extends on the underside of the first arm 3 at a distance from the longitudinal axis of the guide bore 8 and parallel therewith. The first abutment surface 7 and the second abutment surface 10 lie in planes which meet at right angles. It is a decisive feature that the distance between the first abutment surface 7 and the longitudinal axis of the guide hole 5 is equal to the distance between the second abutment surface 10 and the longitudinal axis of the guide bore 8.

The third arm 4 is formed with a screwthreaded bore (not shown) into which is screwed the shank 14 of a spindle screw. Shank 14 has a gripping head 15 and a clamping member 16, the latter lies between the third arm 4 and the first abutment surface 7.

The upper surface of the drill jig 1, extending at right angles to the outer surface 11, is formed with a screwthreaded bore 12 into which a pin 13 is screwed. The head of pin 13, which is formed with a slot for receiving a screwdriver, has a diameter which is equal to or slightly smaller than the diameter of the guide hole 5. The distance of the longitudinal axis of the screwthreaded bore 12 from the outer surface 11 is equal to the distance of the longitudinal axis of the guide hole 5 from the first abutment surface 7.

The drill jig illustrated may be used to drill holes in two workpieces, for example, two timber boards, to enable the two workpieces to be interconnected at right angles by means of dowels. When so connected, the end face of one workpiece is in alignment with the outer surface of the other workpiece arranged at right angles thereto. For this purpose, the workpieces are moved into a position in relation to one another such as is shown for the workpieces 50 and 52 in Fig. 1. In this position the workpieces 50 and 52 may be pressed together by screw clamps (not shown) for secure positioning. As shown the first abutment surface 7 lies on the upper surface zone of the workpiece 50. Workpiece 50 projects beyond the adjacent end face of the workpiece 52. The workpiece 52 lies on the workpiece 50 and its end face abuts the second abutment surface 10. In this position, holes 51 and 53 are drilled through the guide hole 5 and the guide bore 8 in the workpieces 50 and 52. The drilled holes have substantially the same diameter as the guide hole 5. The hole 53 lies at the same distance from the end face of the workpiece 52 abutting the second abutment surface 10, as the hole 51 lies from the surface of the workpiece 50 abutting the first abutment surface 7. The holes 51 and 53 also lie in a common plane.

In this manner, a number of spaced out holes may be made in the workpieces 50 and 52, which are interconnected by clamping. Then, after the workpieces 50 and 52 have been separated, dowels can be inserted in the holes 53 in the workpiece 52. The dowels project from the holes 53. The workpiece 50 with the holes 51 is then placed on to such dowels. For this purpose the workpiece 50 is so positioned on the workpiece 52 that the surface of the workpiece 50 abutting the first abutment surface 7 (Fig. 1) is in alignment with the end face of the workpiece 52 abutting the second abutment surface 10 (Fig. 1).

It may be required that the connection between the workpiece 50 and the workpiece 52 is not to be performed in such a way that one end face of the workpiece 52 is in alignment with one outer surface of the workpiece 50, i.e. unlike the arrangement of the holes 51 and 53 shown in Fig. 1. Instead it may be that the workpiece 50 is to be attached to the workpiece 52 at a fairly large distance from the end face abutting the second abutment surface 10 (Fig. 1). The latter arrangement may be achieved by means of the pin 13. For this purpose the workpiece 50 is first caused to abut the first abutment surface 7 in the manner illustrated in Fig. 1, and the hole 51 is drilled. After such hole or several such holes have been drilled in the workpiece 50, the workpiece 50 is placed on the upper surface of the drill jig 1 (Fig. 1) with the pin 13 extending into the hole 51 and the surface of the workpiece 50, which previously abutted the first abutment surface 7 in alignment with the flat outer surface 11 of the drill jig 1.

In this position the workpiece 52 may·be brought to bear against the workpiece 50 and against the outer surface 11 of the drill jig 1. It is then so positioned that the guide hole 5 is at the place at which a dowel is to be inserted. Thereafter on connection of the workpiece 52 to the workpiece 50, the dowel extends into the hole 51 into which the pin 13 extends. In this position of the workpiece 52, the corresponding hole 53 (Fig. 1) is drilled from the right through the guide hole 5. This procedure ensures that each of the holes 51 and 53, which are to receive a dowel, lies in a common plane whereby the connection is made without difficulty.

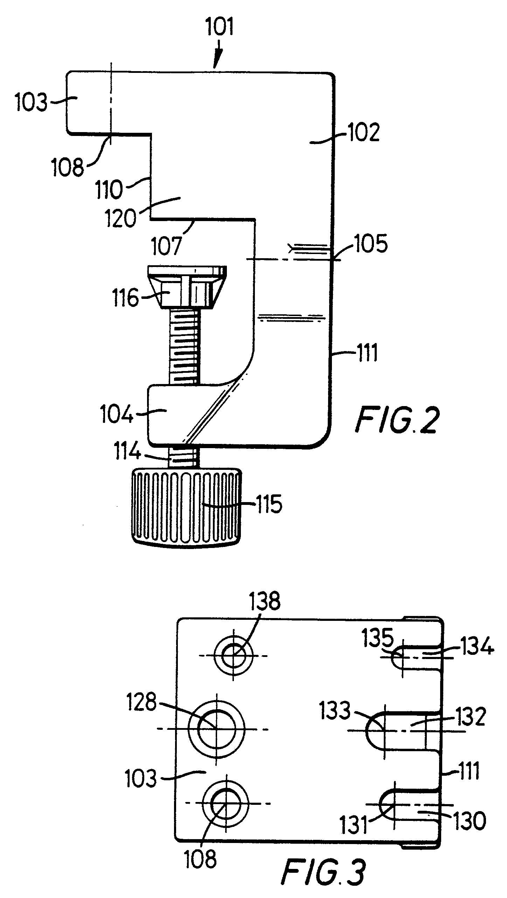

The drill jig shown in Figs. 2 to 5 corresponds in functional principle to the drill jig shown in Fig. 1. For this reason like members have like references, but with the addition of 100. In what follows, basically only the differences from the drill jig in Fig. 1 will be described.

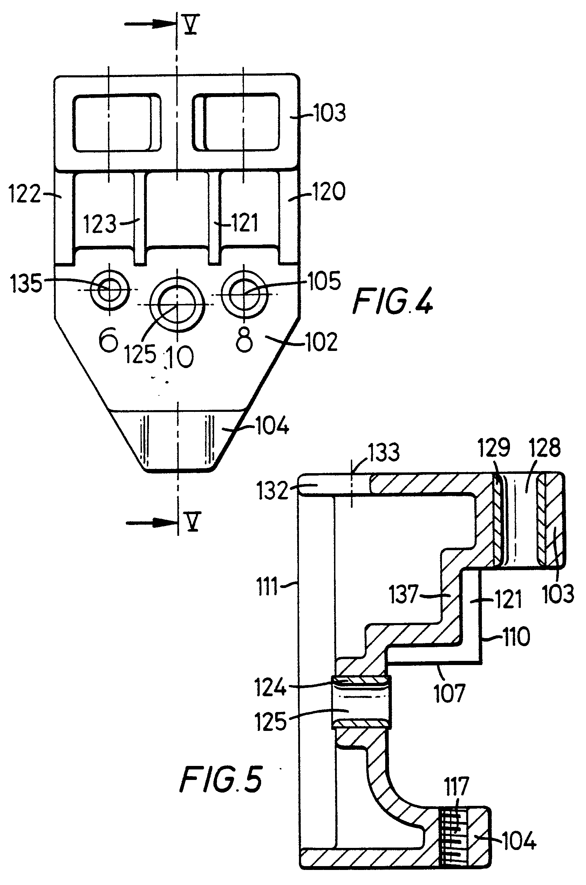

The drill jig shown in Figs. 2 to 5 is suitable for the drilling of holes of difference diameters: the guide hole 135 and guide bore 138 having the smallest diameter, the guide hole 125 and the guide bore 128 having the largest diameter, and the guide hole 105 and the guide bore 108 having a middle diameter. The distance from the first abutment surface 107 and the second abutment surface 110 also differs in accordance with their diameters. However, the guide holes and guide bores also have insert bushes of hardened material. The only bushes shown in Fig. 5 are the bushes 126 and 129 for the guide hole 125 and the guide bore 128.

The first abutment surface 107 and the second abutment surface 110 are formed by four parallel, rib-shaped projections 120, 121, 122 and 123 which merge into a step-shaped wall 137 (Fig. 5) of the drill jig 101. A cavity is disposed between the step-shaped wall 137, the outer surface 111, the top horizontal wall (Fig. 5) of the drill jig 101 and the end walls, one of which is shown in Fig. 2. The upper horizontal wall is formed with pin-receiving slots 130, 132 and 134, so that the cavity is accessible through such slots. As shown in Fig. 3, the bottom of these pin-receiving slots is semi-circular, the centres 131, 133, 135 of such semicircles lying in the same plane as the longitudinal axis of the guide bore 108, 128; 138 (cf. Fig. 3) and the longitudinal axis of the guide hole 105, 125; 135. The distance of the particular centre of the semicircle from the outer surface 111 is equal to the distance of the associated guide hole 105, 125 or 135 from the first abutment surface 107.

The drill jig shown in Figs. 2 to 5 may be used in the same manner as the drill jig shown in Fig. 1 for drilling holes in two workpieces, these holes corresponding to the holes 51 and 53 in the workpieces 50 and 52 shown in Fig. 1. Pin-receiving slots 130, 132 and 134 are provided instead of one or more screwthreaded bores 12 (Fig. 1). The slots have the same function as the screwthreaded bores 12 in Fig. 1. One or more end-face bores are made in a workpiece, corresponding to the bore 51 in Fig. 1. The dowels to be used for the subsequent connection are then inserted in such bores. The particular dowel so inserted, is introduced into the corresponding pin-receiving slot for the positioning of the workpiece and brought into engagement with the slot bottom. The surface of the workpiece formerly abutting the first abutment surface 107 for the drilling of the holes, is now in alignment with the flat outer surface 111. Then the bores are made in the other workpiece in the same manner, as described in connection with the use of the screwthreaded bore 12 and the pin 13 in Fig. 1.

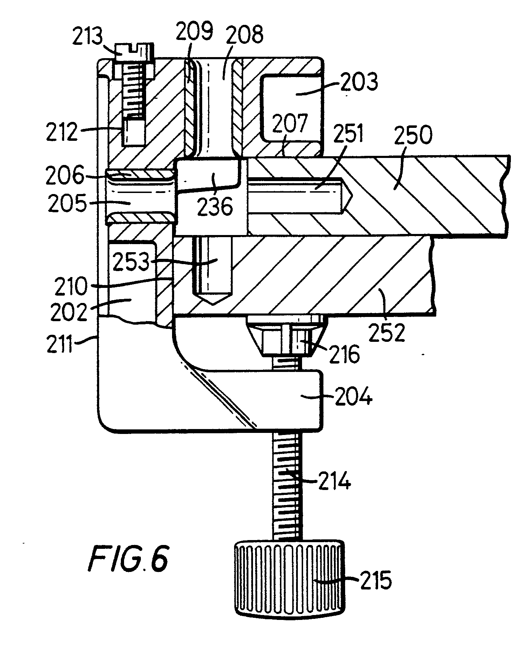

The drill jig shown in Fig. 6 differs from those shown in Fig. 1 and Figs. 2 to 5 in respect of the location of the second abutment surface and the first abutment surface on the drill jig. However, since otherwise it is similar to the drill jig shown in Fig. 1, like members have given like references with the addition of 200.

The drill jig 201 of the drill jig shown in Fig. 6 is substantially U-shaped and has a first arm 203, a second arm 202 and a third arm 204. A guide bore 208 which is bound by aligning bush 209, extends through the first arm 203. A guide hole 205, which is bound by aligning bush 206, extends through the second arm 202. The longitudinal axes of the guide bore 208 and the guide hole 205 extend perpendicular to one another in a common plane. A first abutment surface 207, which is flat, is arranged parallel with the longitudinal axis of the guide hole 205 and extends on the underside of the arm 203 between its free end and the boundary of the guide bore 208 adjacent thereto. A second abutment surface 210 is aligned to be parallel with the longitudinal axis of the guide bore 208 and is disposed on the inner side of the second arm 202. The second abutment surface 210 extends between the third arm 204 and the boundary of the guide hole 205 adjacent thereto. In this case also the distance between the longitudinal axis of the guide bore 208 and the second abutment surface 210 is equal to the distance between the longitudinal axis of the guide hole 205 and the first abutment surface 207.

In the transitional zone between the first arm 203 and the second arm 202 but outside the zone of the guide hole 205 and the guide bore 208, are disposed stops 236 which extend from the second arm 202 beyond the opposite boundary of the guide bore 208.

A shank 214 of a screw clamp is inserted in a screwthreaded bore of the third arm 204. This screwthreaded bore corresponds to screwthreaded bore 117 in Fig. 5. The shank 214 has a gripping head 215 and a clamping member 216.

The procedure for drilling holes into two workpieces, corresponding to the holes 51 and 53 in the workpieces 50 and 52 in Fig. 12 is as follows. The workpiece 250, which is to be drilled at its end face, is caused to abut the first abutment surface 207. The stops 236 prevent the workpiece 250 from moving into the zone of the guide bore 208. The other workpiece 252, which abuts the lower surface of the workpiece 250 as viewed in Fig. 6, is caused to abut the second abutment surface 210. In this position the two workpieces 250 and 252 may be rigidly interconnected by screw clamps (not shown). In this context, the screw clamp 214 extending through the third arm 204 merely attaches the drill jig to the workpieces 250, 252. In this position the holes 251 and 253 can be made by drills guided by the guide hole 205 and the guide bore 208. This ensures that the holes 251 and 253 lie in a common plane and have the same diameter.

After all the holes 251 and 253 have been made, the drill jig is removed, and the screw clamps holding the workpieces 250 and 252 together are loosened. The required dowels are inserted into the holes 253, and the workpiece 250 must then be merely pivoted through 90° anticlockwise (Fig. 6) to bring the holes 251 into engagement with the dowels in the holes 253. In this position the end face of the workpiece 250, which was previously abutting the second abutment surface 210, is in alignment with that surface of the workpiece 250 which was previously abutting the first abutment surface 207.

## Claims

1. A drill jig for preparing dowel joints between two workpieces (50, 52) to be interconnected end face to side face, comprising a first arm (3, 103), a second arm (2, 102) integral with said first arm (3, 103) and extending generally perpendicular to said first arm (3, 103), a guide bore (8, 108) in said first arm (3, 103) for, in use, guiding a drill into one side face of one (52) of said workpieces (50, 52), a guide hole (5, 105) in said second arm (2, 102) for, in use, guiding a drill into one end face of the other (50) of said workpieces (50, 52), the longitudinal axis of said guide bore (8, 108) and said guide hole (5, 105) being mutually perpendicular and in the same plane, said first arm (3, 103) having a first abutment surface (7, 107) which extends parallel to the longitudinal axis of said guide hole (5, 105) and said second arm (2, 102) having a second abutment surface (10, 110) which extends parallel to the longitudinal axis of said guide bore (8), both abutment surfaces lying in planes which meet at right angles, characterized in that the distance between said first abutment surface (7, 107) and the longitudinal axis of said guide hole (5, 105) is equal to the distance between said second abutment surface (10, 110) and the longitudinal axis of said guide bore (8, 108), and in that said first abutment surface (7, 107) and said second abutment surface (10, 110) lie completely inside the right angle enclosed by the longitudinal axis of the guide bore (8, 108) and the guide hole (5, 105).

2. A drill jig for preparing dowel joints between two workpieces (250, 252) to be interconnected end face to side face, comprising a first arm (203), a second arm (202) integral with said first arm (203) and extending generally perpendicular to said first arm (203), a guide bore (208) in said first arm (203) for, in use, guiding a drill into one side face of one (252) of said workpieces (250, 252), a guide hole (205) in said second arm (202) for, in use, guiding a drill into one end face of the other (250) of said workpieces (250, 252), the longitudinal axis of said guide bore (208) and said guide hole (205) being mutually perpendicular and in the same plane, said first arm (203) having a first abutment surface (207) which extends parallel to the longitudinal axis of said guide hole (205) and said second arm (202) having a second abutment surface (210) which extends parallel to the longitudinal axis of said guide bore (208), both abutment surfaces lying in planes which meet at right angles, characterized in that the distance between said first abutment surface (207) and the longitudinal axis of said guide hole (205) is equal to the distance between said second abutment surface (210) and the longitudinal axis of said guide bore (208) and in that the first abutment surface (207) lies on the first arm (203) and is located further from the corner between the two arms than the guide bore (208), and that the second abutment surface (210) lies on the second arm (202) and is located further from the corner between the two arms than the guide hole (205).

3. A drill jig as claimed in Claim 2, including stops (236) to prevent said other (250) of said workpieces obstructing said guide bore (208).

4. A drill jig as claimed in any one of Claims 1 to 3, including a third arm (4, 104, 204) extending generally perpendicular to said second arm (2, 102, 202) and a clamping screw (14, 114, 214) arranged with its clamping end (16, 116, 216) extending out of said third arm (4, 104, 204) on the side of said first arm (3, 103, 203).

5. A drill jig as claimed in any one of Claims 1 to 4, wherein a flat outer surface (11; 211) of the drill jig (1; 201) is parallel with the second abutment surface (10, 210) and extends at right angles to the longitudinal axis of said at least one guide hole (5; 205), and a pin receiving bore (12; 212) is provided in the outside of that zone of the drill jig (1; 201) which has at least one guide bore (8; 208) said pin-receiving bore (12; 212) extending parallel with the guide bore (8; 208) with its longitudinal axis lying in the plane of the longitudinal axes of guide hole (5; 205) and guide bore (8; 208), the distance of said pin-receiving bore (12, 212) from the outer surface (11; 211) of the drill jig (1; 201) being equal to the distance between the first abutment surface (7; 207) and the guide hole (5; 205).

6. A drill jig as claimed in Claim 5, further comprising a pin (13; 213) for insertion in the pin-receiving bore (12; 212), wherein said pin (13, 213) has a head which has a diameter only slightly smaller than the diameter of the guide hole (5; 205).

7. A drill jig as claimed in any one of Claims 1 to 4, wherein a flat outer surface (111) of the drill jig (101) is parallel with the second abutment surface (110) and extends at right angles to the longitudinal axis of said at least one guide hole (105, 125, 135), a zone (103) of the drill jig (101) extending normally of said guide bore (108, 128, 138), at least one pin-receiving slot (130, 132, 134) having a semi-circular slot bottom and being located in the outside of said zone (103), said pin-receiving slot (130, 132, 134) having a longitudinal axis which extends through the centre (131, 132, 134) of the semi-circle of the slot bottom and parallel with the longitudinal axis of the guide bore (108; 128; 138), the said longitudinal axis of said slot (130, 132, 134) lying in the plane of the longitudinal axes of guide hole (105; 125; 135) and the guide bore (108; 128; 138), the distance of said slot (130, 132, 134) from the outer surface (111) of the drill jig (101) being equal to the distance between the first abutment surface (107) and the guide hole (105; 125; 135), the radius of said semicircle slot bottom being equal to or slightly greater than the radius of the guide hole (105; 125; 135).

## Patentansprüche

1. Bohrlehre zur Herstellung von Dübelverbindungen zwischen zwei Werkstücken (50, 52), die Endfläche auf Seitenfläche verbunden werden sollen, aufweisend einen ersten Arm (3, 103), einen einstückig mit dem ersten Arm (3, 103) ausgebildeten und sich im allgemeinen senkrecht zu dem ersten Arm (3, 103) erstreckenden zweiten Arm (2, 102), eine Führbohrung (8, 108) im ersten Arm (3, 103), um im Gebrauch einen Bohrer in eine Seitenfläche eines (52) der Werkstücke (50, 52) zu führen, ein Führloch (5, 105) im zweiten Arm (2, 102), um im Gebrauch einen Bohrer in eine Endfläche des anderen (50) der Werkstücke (50, 52) zu führen, wobei die Längsachse der Führbohrung (8, 108) und des Führloches (5, 105) zueinander senkrecht und in derselben Ebene liegen, der erste Arm (3, 103) eine erste Anlagefläche (7, 107), die sich parallel zur Längsachse des Führloches (5, 105) erstreckt, und der zweite Arm (2, 102) eine zweite Anlagefläche (10, 110) hat, die sich parallel zur Längsachse der Führbohrung (8) erstreckt, wobei beide Anlageflächen in Ebenen liegen, die sich unter einem rechten Winkel schneiden, dadurch gekennzeichnet, daß der Abstand zwischen der ersten Anlagefläche (7, 107) und der Längsachse des Führloches (5, 105) gleich dem Abstand zwischen der zweiten Anlagefläche (10, 110) und der Längsachse der Führbohrung (8, 108) ist und daß die erste Anlagefläche (7, 107) und die zweite Anlagefläche (10, 110) vollständig innerhalb des rechten Winkels liegen, der von der Längsachse der Führbohrung (8, 108) und des Führloches (5, 105) eingeschlossen wird.

2. Bohrlehre zur Herstellung von Dübelverbindungen zwischen zwei Werkstücken (250, 252), die Endfläche zu Seitenfläche verbunden werden sollen, aufweisend einen ersten Arm (203), einen einstückig mit dem ersten Arm (203) ausgebildeten und sich im allgemeinen senkrecht zum ersten Arm (203) erstreckenden zweiten Arm (202), eine Führbohrung (208) im ersten Arm (203), um im Gebrauch einen Bohrer in eine Seitenfläche eines (252) der Werkstücke (250, 252) zu führen, ein Führloch (205) im zweiten Arm (202), um im Gebrauch einen Bohrer in eine Endfläche des anderen (250) der Werkstücke (250, 252) zu führen, wobei die Längsachse der Führbohrung (208) und des Führloches (205) senkrecht zueinander und in der gleichen Ebene verlaufen, der erste Arm (203) eine erste Anlagefläche (207), die sich parallel zur Längsachse des Führloches (205) erstreckt, und der zweite Arm (202) eine zweite Anlagefläche (210) hat, die sich parallel zur Längsachse der Führbohrung (208) erstreckt, wobei beide Anlageflächen in Ebenen liegen, die sich unter einem rechten Winkel schneiden, dadurch gekennzeichnet, daß der Abstand zwischen der ersten Anlagefläche (207) und der Längsachse des Führloches (205) gleich dem Abstand zwischen der zweiten Anlagefläche (210) und der Längsachse der Führbohrung (208) ist und daß die erste Anlagefläche (207) am ersten Arm (203) vorgesehen ist und weiter von der Ecke zwischen den beiden Arme entfernt ist als die Führbohrung (208) und daß die zweite Anlagefläche (210) am zweiten Arm (202) vorgesehen ist und weiter von der Ecke zwischen den beiden Armen entfernt ist als das Führloch (205).

3. Bohrlehre nach Anspruch 2 mit Anschlägen (236), um zu verhindern, daß das andere (250) der Werkstücke die Führbohrung (208) versperrt.

4. Bohrlehre nach einem der Ansprüche 1 bis 3, mit einem dritten sich im allgemeinen senkrecht zum zweiten Arm (2, 102, 202) erstreckenden Arm (4, 104, 204) und einer Klemmschraube (14, 114, 214), die sich mit ihrem Klemmende (16, 116, 216) an der Seite des ersten Arms (3, 103, 203) aus dem dritten Arm (4, 104, 204) erstreckend angeordnet ist.

5. Bohrlehre nach einem der Ansprüche 1 bis 4, bei der eine ebene äußere Fläche (11; 211) der Bohrlehre (1; 201) parallel zur zweiten Anlagefläche (10, 210) verläuft und sich unter einem rechten Winkel zur Längsachse des mindestens einen Führloches (5; 205) erstreckt sowie eine Zapfenaufnahmebohrung (12; 212) in der Außenseite des Bereichs der Bohrlehre (1; 201) vorgesehen ist, die die zumindest eine Führbohrung (8; 208) aufweist, wobei sich die Zapfenaufnahmebohrung (12; 212) parallel zur Führbohrung (8; 208) mit ihrer Längsachse in der Ebene der Längsachsen von Führloch (5; 205) und Führbohrung (8; 208) liegend erstreckt und der Abstand der Zapfenaufnahmebohrung (12, 212) von der äußeren Fläche (11; 211) der Bohrlehre (1; 201) gleich dem Abstand zwischen der ersten Anlagefläche (7; 207) und dem Führloch (5; 205) ist.

6. Bohrlehre nach Anspruch 5, ferner aufweisend einen Zapfen (13; 213) zum Einsetzen in die Zapfenaufnahmebohrung (12; 212), wobei der Zapfen (13, 213) einen Kopf aufweist, dessen Durchmesser nur geringfügig kleiner als der Durchmesser des Führloches (5; 205) ist.

7. Bohrlehre nach einem der Ansprüche 1 bis 4, bei der eine ebene äußere Fläche (111) der Bohrlehre (101) parallel zur zweiten Anlagefläche (110) verläuft und sich rechtwinklig zur Längsachse des mindestens einen Führloches (105, 125, 135) erstreckt, ein Bereich (103) der Bohrlehre (101) sich normal zur Führbohrung (108, 128, 138) erstreckt, mindestens ein Zapfenaufnahmeschlitz (130, 132, 134) einen halbkreisförmigen Schlitzgrund aufweist und in der Außenseite des Bereiches (103) vorgesehen ist, der Zapfenaufnahmeschlitz (130, 132, 134) eine Längsachse hat, die sich durch die Mitte (131, 132, 134) des Halbkreises des Schlitzgrundes und parallel zur Längsachse der Führbohrung (108; 128; 138) erstreckt, die Längsachse des Schlitzes (130, 132, 134) in der Ebene der Längsachsen von Führloch (105; 125; 135) und Führbohrung (118, 128; 138) liegt, der Abstand des Schlitzes (130, 132, 134) von der Außenfläche (111) der Bohrlehre (101) gleich dem Abstand zwischen der ersten Anlagefläche (107) und dem Führloch (105; 125; 135) ist, der Radius des halbkreisförmigen Schlitzgrundes gleich dem oder geringfügig größer als der Radius des Führloches (105; 125; 135) ist.

**Revendications**

1. Gabarit de perçage destiné à préparer des assemblages à chevilles entre deux pièces (50, 52) qu'il s'agit d'assembler face d'extrémité contre face latérale, comprenant un premier bras (3; 103), un deuxième bras (2; 102) d'une seule pièce avec le premier bras (3; 103) et qui s'étend dans son ensemble perpendiculairement audit premier bras (3; 103), un perçage de guidage (8; 108) formé dans ledit premier bras (3; 103) et servant en utilisation à guider un foret pénétrant dans une face latérale de l'une (52) desdites pièces (50, 52), un trou de guidage (5; 105) formé dans ledit deuxième bras (2, 102) et servant en utilisation à guider un foret pénétrant dans une face d'extrémité de l'autre (50) desdites pièces (50, 52), les axes longitudinaux dudit perçage de guidage (8; 108) et dudit trou de guidage (5; 105) étant perpendiculaires entre eux et contenus dans le même plan, ledit premier bras (3; 103) présentant une première surface de butée (7; 107) qui s'étend parallèlement à l'axe longitudinal dudit trou de guidage (5; 105) et ledit deuxième bras (2, 102) présentant une deuxième surface de butée (10; 110) qui s'étend parallèlement à l'axe longitudinal dudit perçage de guidage (8), les deux surfaces de butée s'étendant dans des plans qui se rencontrent à angle droit, caractérisé en ce que la distance entre ladite première surface de butée (7; 107) et l'axe longitudinal dudit trou de guidage (5; 105) est égale à la distance entre ladite deuxième surface de butée (10; 110) et l'axe longitudinal dudit perçage de guidage (8; 108), et en ce que ladite première surface de butée (7; 107) et ladite deuxième surface de butée (10; 110) sont situées entièrement à l'intérieur de l'angle droit formé par les axes longitudinaux dudit perçage de guidage (8; 108) et dudit trou de guidage (5, 105).

2. Gabarit de perçage destiné à préparer des assemblages à chevilles entre deux pièces (250, 252) qu'il s'agit d'assembler face d'extrémité contre face latérale, comprenant un premier bras (203), un deuxième bras (202) d'une seule pièce avec ledit premier bras (203) et qui s'étend dans son ensemble perpendiculairement audit premier bras (203), un perçage de guidage (208) formé dans ledit premier bras (203) et servant en utilisation à guider un foret pénétrant dans une face latérale de l'une (252) desdites pièces (250, 252), un trou de guidage (205) formé dans ledit deuxième bras (202) et servant en utilisation à guider un foret pénétrant dans une face d'extrémité de l'autre (250) desdites pièces (250, 252), les axes longitudinaux dudit perçage de guidage (208) et dudit trou de guidage (205) étant perpendiculaires entre eux et contenus dans le même plan, ledit premier bras (203) présentant une première surface de butée (207) qui s'étend parallèlement à l'axe longitudinal dudit trou de guidage (205) et ledit deuxième bras (202) présentant une deuxième surface de butée (210) qui s'étend parallèlement à l'axe longitudinal dudit perçage de guidage (208), les deux surfaces de butée s'étendant dans des plans qui se rencontrent à angle droit, caractérisé en ce que la distance entre ladite première surface de butée (207) et l'axe longitudinal dudit trou de guidage (205) est égale à la distance entre ladite deuxième surface de butée (210) et l'axe longitudinal dudit perçage de guidage (208), en ce que la première surface de butée (207) est située sur le premier bras (203) et est placée plus loin de l'angle entre les deux bras que le perçage de guidage (208), et en ce que la deuxième surface de butée (210) est située sur le deuxième bras (202) et est placée plus loin de l'angle entre les deux bras que le trou de guidage (205).

3. Gabarit de perçage selon la revendication 2, comprenant des taquets (236) servant à empêcher l'autre (250) desdites pièces d'obstruer ledit perçage de guidage (208).

4. Gabarit de perçage selon l'une quelconque des revendications 1 à 3, comprenant un troisième bras (4; 104; 204) qui s'étend dans son ensemble perpendiculairement au deuxième bras (2; 102; 202), et une vis de serrage (14; 114; 214) agencée de telle manière que son extrémité de serrage (16; 116; 216) fasse saillie à partir du troisième bras (4; 104; 204) sur le côté dudit premier bras (3; 103; 203).

5. Gabarit de perçage selon l'une quelconque des revendications 1 à 4, dans lequel une surface externe plate (11; 211) du gabarit de perçage (1; 201) est parallèle à la deuxième surface de butée (10; 210) et s'étend perpendiculairement à l'axe longitudinal dudit ou desdits trous de guidage (5; 205), et un perçage de réception de goujon (12; 212) est prévu dans la face extérieure de la zone du gabarit de perçage (1; 201) qui possède au moins un perçage de guidage (8; 208), ledit perçage de réception de goujon (12; 212) s'étendant parallèlement au perçage de guidage (8; 208), avec son axe longitudinal contenu dans le plan des axes longitudinaux du trou de guidage (5; 205) et du perçage de guidage (8; 208), la distance entre ledit perçage de réception de goujon (12; 212) et la surface extérieure (11; 211) du gabarit de perçage (1; 201) étant égale à la distance entre la première surface de butée (7; 207) et le trou de guidage (5; 205).

6. Gabarit de perçage selon la revendication 5, comprenant en outre un goujon (13; 213) destiné à s'insérer dans le trou de réception de goujon (12; 212), ledit goujon (13; 213) possédant une tête qui a un diamètre juste légèrement inférieur au diamètre du trou de guidage (5; 205).

7. Gabarit de perçage selon l'une quelconque des revendications 1 à 4, dans lequel une surface extérieure plate (111) du gabarit de perçage (101) est parallèle à la deuxième surface de butée (110) et s'étend perpendiculairement à l'axe longitudinal dudit ou desdits trous de guidage (105, 125, 135), une zone (103) du gabarit de perçage (101) s'étendant à angle droit dudit perçage de guidage (108, 128, 138), au moins une fente de réception de gounon (130, 132, 134) présentant un fond de fente semicirculaire et ménagée dans la face extérieure de ladite zone (103), ladite fente de réception de goujon (130, 132, 134) ayant un axe longitudinal qui passe par le centre (131, 132, 134) du demi-cercle du fond de la fente et s'étend parallèlement à l'axe longitudinal du perçage de guidage (108, 128, 138), ledit axe longitudinal de ladite fente (130, 132, 134) se trouvant dans le plan des axes longitudinaux du trou de guidage (105; 125; 135) et du perçage de guidage (108, 128, 138), la distance entre la fente (120, 132, 134) et la surface extérieure (111) du gabarit de perçage (101) étant égale à la distance entre la première surface de butée (107) et le trou de guidage (105, 125, 135), le rayon dudit fond de fente semi-circulaire étant égal ou légèrement supérieur au rayon du trou de guidage (105, 125, 135).

FIG.1

101

103

102

108

110

120

107

105

116

111

104

114

115

*FIG.2*

138

135

134

128

133

132

103

111

108

131

130

*FIG.3*

FIG.4

FIG.5

FIG.6